# EUROPEAN PATENT SPECIFICATION

(11) **EP 2 124 390 B1**
(45) Date of publication and mention of the grant of the patent: **31.08.2011**
(21) Application number: 09425199.8
(22) Date of filing: 21.05.2009
(51) Int. Cl.: H04L 12/28, H04L 29/06

(54) **Communication system for a dwelling unit comprising an intercom system**
Kommunikationssystem für eine Wohneinheit mit einer Sprechanlage
Système de communication pour unité d'habitation avec système d'interphone

(30) Priority: 23.05.2008 IT MI20080956
(43) Date of publication of application: 25.11.2009
(73) Proprietor: Timtel S.r.l., 20159 Milano (IT)
(72) Inventor: Bertoldi, Cecilia, 20154 Milano (IT); Ciarchi, Alberto, 20060 Bellinzago Lombardo, Milano (IT)
(74) Representative: Long, Giorgio

(56) References cited:
- WO-A-99/65192
- WO-A-2006/118750
- FR-A- 2 864 309
- JP-A- 2003 333 199
- US-A1- 2005 141 529
- US-A1- 2007 225 867
- YEON-JOO OH ET AL: "Design of a Video Door Phone Service Providing Personal Mobility Based on Home Gateway System" INFORMATION NETWORKING. ADVANCES IN DATA COMMUNICATIONS AND WIRELESS N ETWORKS LECTURE NOTES IN COMPUTER SCIENCE;;LNCS, SPRINGER, BERLIN, DE, vol. 3961, 1 January 2006 (2006-01-01), pages 815-822, XP019050805 ISBN: 978-3-540-48563-6

## Description

The object of the present invention is a communication system, for a dwelling unit, for example for a house or apartment building, and particularly a communication system for a dwelling unit over an Ethernet type communication network.

A dwelling unit or an apartment building with several apartments is usually provided with an intercom or video intercom installation typically consisting of an external apparatus arranged proximate to the building front door and a plurality of internal intercom apparatuses accommodated in each apartment.

In order to allow communication between the central intercom apparatus and the internal intercom apparatuses, the dwelling unit or apartment building is provided with a communication system distributed within the premises to allow physical and electrical connection among the intercom installation apparatuses.

A traditional intercom communication installation or system requires to be updated any time new technologies relating electrical communications for phone and/or data services are developed. The updating of an intercom communication installation or system is not always simple and in many cases it also implies the reconstruction, which may even mean the complete reconstruction, of the installation thereby leading to updating and/or maintenance costs in terms of hardware and software which may also be considerable.

JP 2003 333199 A relates to an intercom system wherein a door phone, a room phone and a PC are respectively connected to an administrative server via a LAN.

US 2005/141629 A1 describes a communication system including a communication apparatus having memory, telephone controller, voice processor, network interface, display drive and key interface.

YEON-JOO OH ET AL: "Design of a video door phone service providing personal mobility based on home gateway system", pages 815-822, XP019050805, discloses an architecture using session initiation protocol and a home gateway system connected to a conventional intercom or a video door phone system.

WO 99165192 A relates to a service platform server connected, via a LAN, to one or more remote devices.

WO 2006/118750 A discloses a system to configure and operate a residential local area network based telephone system.

FR-A-2 864 309 discloses a terminal having an electronic or magnetic badge reader and an intercom system integrated with a micro-camera.

US 2007/225867 A1 describes multiple device addressing, discovery, description, control, eventing, and convergence in a Web Service environment, and control through an input device.

The object of the present invention is to provide an intercom communication system for a dwelling unit which partially overcomes the above-described drawback and particularly results to be more flexible, scalable and easily updatable while maintaining a high degree of reliability at reasonable costs.

This object and these tasks are achieved by means of a communication system in accordance with the independent claim 1.

Further characteristics and advantages of the device according to the invention will be apparent from the description set forth below of preferred exemplary embodiments, which are given by way of non-limiting examples, with reference to the annexed drawings, in which:
- Fig. 1 schematically shows a communication system according to an example of the invention which is operatively associated, by means of a WAN network, to a remote apparatus;
- Fig. 2 illustrates from a technical point of view, by means of a block diagram, what is illustrated in Fig. 1;
- Fig. 3 shows by means of a block diagram an example of apartment building employing the communication system according to an embodiment of the invention, and
- Fig. 4 schematically shows a WAN network with which a plurality of apartment buildings is operatively associated where the communication system according to the invention is used.

With reference to said figures, with numeral 100 has been designated a communication system for a dwelling unit, preferably an apartment building, according to an example of the invention.

The communication system 100 comprises a first, central intercom apparatus 200, for example, arranged outside the apartment building at the entrance thereof. The first central intercom apparatus 200 is preferably a digital video intercom apparatus which is configured in terms of hardware (electronic and/or mechanic circuits) and software to simultaneously manage video intercom and other premises facilities.

In addition to the first central intercom apparatus 200, the communication system 100 further comprises at least one second peripheral or internal intercom apparatus 300 operatively associated with the first central or external intercom apparatus 200. An example of a second peripheral apparatus 200 will be described below.

Referring back to the first central intercom apparatus 200, it should be noted that it preferably comprises a video intercom panel configured to allow communication between the first central video intercom apparatus and the second peripheral intercom apparatus 300.

In an exemplary embodiment, the video intercom panel 200 comprises: a microphone, a speaker, a camera (components which are known per se) and a communication and implementation device specially configured to handle an information flow for a communication between the video intercom panel 200 and peripheral intercom/video intercom apparatuses associated with interiors of a house. Additionally, this video intercom platform is configured to control the condition of automatisms with which the apartment building is provided and allow the users (for example, the occupants of the apartment building) to interact therewith.

From a hardware point of view, the video intercom panel 200 comprises, for example, a standard ITX board, known per se, a Linux operating system being installed thereon. The ITX board, in addition to the computing power supplied by a Central Processing Unit (CPU) with which it is provided, further comprises, preferably in integrated mode, peripherals such as, for example: Ethernet network interface card, sound card, serial ports and parallel port, VGA video card.

From a software point of view, the communication and implementation device of the video intercom panel 200 is programmed with a communication and implementation management software such as, for example, an Asterisk - PBX open source software for controlling the sorting of voice data in Voice Over IP technology (VoIP). Particularly, this application software is such as to handle data flows over public protocols such as, for example the Session Initiation Protocol (SIP), which is known per se and mainly used for telephony applications over IP o VoIP, or Inter Asterisk Xchange protocol (IAX), which is also known and used, for example, to enable VoIP connections between the Asterisk server and/or servers and clients using the same protocol.

Furthermore, in addition to the communication and implementation management software, further applications result to be loaded in the intercom panel communication and implementation device, or generally the intercom panel itself, which applications are written for examples in the C programming language, in order to prepare the intercom panel to carry out particular operations.

For example, a first application preferably written in the C language advantageously allows adapting the requirements of the video intercom panel 200 to those of a PBX Asterisk server. In addition, a second application in the C language allows turning a user action of pushing a key on a peripheral or internal intercom to the operation of an automatic mechanism of the building. Additionally, a third application in the C language allows providing the peripheral or internal intercoms with the data representative of the images captured by the camera.

It should be further observed that the application software for management of the video intercom panel operating modes comprises, for example: a web Apache server with PHP module and a PHP application to implement the interface with the user (for example a caretaker of the apartment building).

The communication system 100 further comprises a first local data communication network RC1 of switched type, for example Ethernet, known per se, which is preferably distributed within pipelines previously used for the distribution of the cables employed for installing traditional intercom or video intercom systems in the apartment building. Alternatively, the first Ethernet type communication network RC1 can be distributed by fixing the cables thereof outside of these tubes.

The communication system 100 in accordance with the example described herein, further comprises a plurality of switching and/or routing devices and a plurality of electric power supplies therefor which are suitably configured for handling the dataflow in the first data communication network NC1.

Particularly, in accordance with an embodiment, the first data communication network RC1 is wired, in order to ensure an electric power supply to the network and components thereof, according to a distribution comprising housings or high boxes joined either with external tubes or via ducts or recessed, where this is feasible or convenient, to the individual boxes used for the pre-existing video intercom facility. In said high boxes electric distributors, feeder transformers, any UPS apparatus in case an alternative power supply system is provided, can be accommodated.

Alternatively, in a further embodiment, the first data communication network RC1 can be associated with a centralized electric power supply system, where feasible and convenient, after admissible dispersion and electric power loss calculations have been carried out.

It should be observed that the first communication network RC1 results to be advantageously distributed such as to reach, starting from the ground floor or underground floor, the upper floors of the apartment building.

From a hardware point of view, the first Ethernet communication network RC1 is advantageously provided using UTP cables, which are known per se to those skilled in the art of electric communication.

From a software point of view, the first data communication network RC1 is configured to support TCP/IP transmission protocols.

Referring back to the first central intercom apparatus 100, it is configured to be operatively associated with the first communication network NC1, for example by means of an Ethernet card, as stated above.

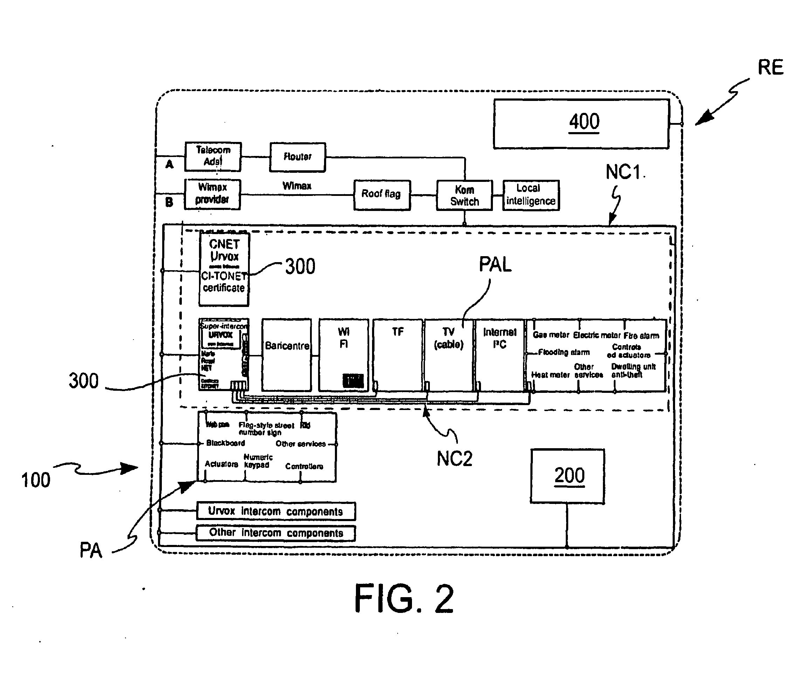

With reference now to Fig. 2, in addition to the first intercom apparatus 200, the communication system 100 of the example described above comprises a plurality of electronic and/or mechanical apparatuses PA which are operatively associated with the first central intercom apparatus 200 by means of the first communication network NC1.

Referring to Fig. 2, this plurality of apparatuses comprises, for example, apparatuses which are suitably arranged for the generation and/or routing within the first communication network NC1 of phone and/or data electric signals, video intercom or simply intercom electric signals and suitable electric power supply apparatuses of the first central intercom apparatus 200.

Furthermore, this plurality of apparatuses PA can comprise other electronic devices such as safety electronic devices (for example, a security camera or video intercom camera) or other equipment intended for other applications such as, for example: volumetric sensors for detecting people standing at the entrance, for energy saving purposes; spotlights associated with the volumetric sensors; alarm device (for example a tremble bell or a buzzer) for opening the front door of the apartment building in case the front door should be always closed by default, actuators, controllers, numerical keypad, videoconference blackboard, street number flag-type sign and the like. As relates the street number flag-type sign, it can integrate further electronic cards intended to perform further functions such as, for example: flash alarm generating cards, UMTS card for local phones, local alarm transmission board, air pollution measurement sensor board (CO₂, PM5 or PM10 levels), microphone card, receiver antenna cards, speaker cards, volume sensor card, remote controller receiver cards and the like.

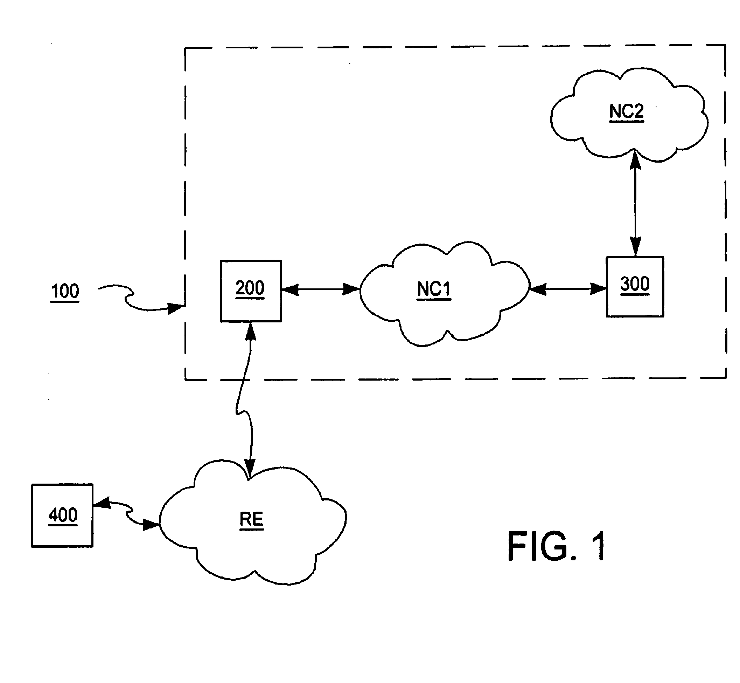

With reference now to Fig. 1 and 2, the communication system 100 further comprises at least one second Ethernet local communication network NC2 which is preferably distributed in a dwelling unit or apartment of the apartment building. By sake of clarity, reference will be made to a second communication network NC2 by supposing for simplicity that the house/apartment building comprises only one dwelling unit or apartment. In case the house or apartment building comprises, as appears reasonable, a plurality of dwelling units, each of them will be arranged with its own local communication network entirely similar to the second communication network NC2 operatively associated with the first communication network NC1 of the apartment building by means of its own peripheral intercom apparatus entirely similar to that mentioned above and described below.

As stated above, the communication system 100 further comprises at least one second peripheral or internal intercom or video intercom apparatus 300 preferably installed within an individual dwelling unit of the apartment building and configured to be operatively associated with the first communication network NC1 to communicate with the first central intercom apparatus 200.

As relates to the second peripheral intercom or video intercom apparatus 300, it typically comprises an intercom handset receiver and a support base integrating control buttons of the apartment building automatisms.

In accordance with the embodiment of the invention according to the example in Fig. 2, the second video intercom apparatus 300 results to be advantageously configured to be operatively associated with the second communication network NC2 and a plurality of local apparatuses PAL distributed within the dwelling unit. This plurality of local apparatuses PAL comprises, for example: a Wi-Fi module barycentric to the dwelling unit, cable television, personal computer configured for Internet browsing, or other dwelling unit monitoring apparatuses, such as, for example, a gas meter, an electric meter, a heat meter, a fire alarm device, a flooding alarm device, an anti-theft device, general controls and/or actuators and the like.

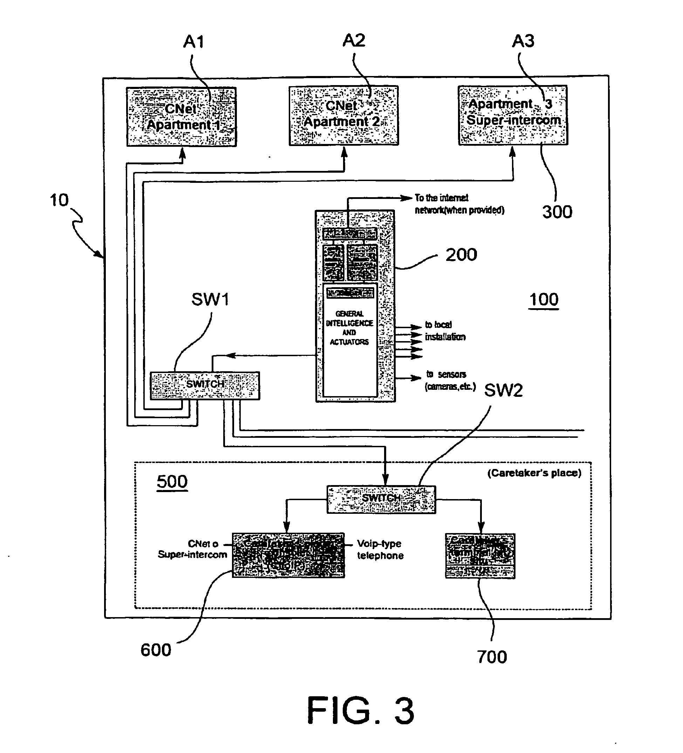

With general reference to Fig. 1 and 2, and particularly to Fig. 3, the first intercom central apparatus 200 results to be advantageously configured to be operatively connected to a remote service apparatus 400 by means of a third communication network RE external to the communication system 100 of the inventive example. An example of a third communication network RE is the Internet.

Particularly, the communication system 100 further comprises a switchboard apparatus (not shown in the figure) operatively associated with the first central intercom apparatus 200 and provided with a first reading circuit of first codes representative of the presence or absence of a remote service apparatus. In a particular embodiment, the switchboard apparatus results to be advantageously integrated in the first central intercom apparatus 200.

Accordingly, the first central intercom apparatus 200 results to be advantageously configured to recognize and optionally establish a connection with the remote service apparatus 400 by means of the third communication network RE in case the first central intercom apparatus 200 receives and recognizes said first codes. It should be noted that in this configuration, the first central intercom apparatus 200 results to be advantageously configured to operate as a switch for the various services that can be provided, via the third communication network (Internet), by the above-said remote service apparatus 400. In this configuration, in which the presence of an external network (third communication network RE) at the apartment building relative to the first NC1 and second NC2 communication networks which are considered as being internal to the apartment building is detected, several services can be advantageously transferred from the first central intercom apparatus 200 to the remote service apparatus 400.

On the other hand, when the first central intercom apparatus 200 does not receive any of the above-said first codes, however, it is configured to ensure the normal operation of the first central intercom apparatus 200 in case the connection to the third communication network is not available. In this case, any service available in the remote service apparatus 400 will be handled, where possible, at a local level by the first central intercom apparatus 200.

As relates to the remote service apparatus 400, it is substantially embodied in a so-called remote intelligence service center.

In an alternative embodiment, the communication system 100 can comprise a plurality of remote service centers CSR which are operatively connected to each other by means of the third communication network RE (Internet).

Advantageously, the remote service apparatus 400 can be operatively connected to one or more centers of the above-said plurality of remote service centers CSR.

Examples of remote service centers can be, for example: a technical agency; a technical laboratory; an apartment building alarm manager; a security agency, a public authority.

Referring back to the first central intercom apparatus 200, it should be observed that it further comprises a second electronic circuit for reading second codes representative of authentication request and consequent enabling of a connection, through the first communication network NC1, between the central intercom apparatus and an installation apparatus and/or equipment, for example the second peripheral intercom apparatus 300.

In accordance with a further embodiment, the communication system 100 further comprises a further peripheral intercom or video intercom apparatus (not shown in the figures), which is entirely similar to the second peripheral intercom apparatus described above, and which is associated with a caretaker of the apartment building as the caretaker's place (video)intercom apparatus. It should be noted that this apparatus further results to be available to other users in the apartment building which may use it as a VoiIp (video)phone.

In an embodiment alternative to the latter described herein, the further caretaker's place apparatus, definable as the caretaker's workstation in situ, comprises, for example, a notebook configured to control local cameras, to operate apartment building controls and the settings desired by each user (dwelling unit occupants of the apartment building) and, optionally to allow the caretaker to act as a video-caretaker for other buildings or apartment buildings.

It should be noted that from a software point of view, the notebook at the caretaker's place apparatus has a Linux operating system (Open source) installed therein, application software for various display functions, web browser (for example, Firefox), application or video-caretaker's operativeness.

With reference to Fig. 3, several parts of the communication system described above as being associated with an apartment building, generally designated with reference numeral 10 having three dwelling units A1, A2 and A3 are schematically shown by a block diagram.

Particularly, again, the communication system 100 comprises at least one first switch device SW1 configured to permit the first central intercom apparatus 200 to establish a connection and convey a data and/or (video)phone communication to one of the intercom apparatuses with which the above-said three apartments are provided, for example to the second peripheral intercom apparatus 300 internal to the third apartment A3.

Furthermore, the first switch device SW1 can be configured to allow establishing a communication and conveying data and/or (video)telephony between the first central intercom apparatus 200 and a caretaker's place 500.

Particularly, as shown in the example in Fig. 3, the communication system 100 further comprises a second switch device SW2 preferably accommodated in the caretaker's place and configured to allow the first central intercom apparatus 200 to communicate with a caretaker's place switchboard device 600 or with a terminal of the caretaker's workstation 700.

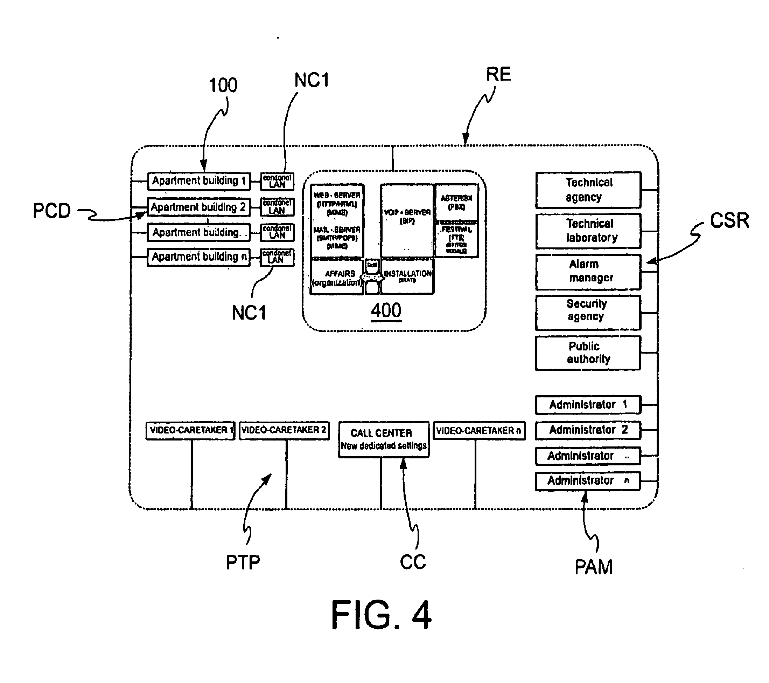

With reference particularly to Fig. 4, in case a plurality of apartment buildings PCD are each provided with a data communication system according to the example of the invention as described herein (the first communication network NC1 is shown in the figure per each one of them), each of the communication systems 100 can be operatively connected, by means of the third communication network RE (Internet), in addition to the plurality of apartment buildings PCD, also to the remote service apparatus 400, the plurality of service centers CSR, a plurality of devices representative of video-caretaker services PTP, a plurality of devices representative of other administrators PAM and also a further customer care center such as call center CC. The list set forth herein has been given by way of example and is not comprehensive.

As may be understood, the object of the invention is fully achieved in that the communication system has high scalability. Furthermore, using a ITX card with a Linux open source operating system gives the communication system a high degree of flexibility. In addition, the communication system allows installing further software parts and the connection to the Ethernet network of new devices and/or apparatuses in response to any update and/or request by the users of the apartment building. It should be noted that, advantageously, all this is possible without carrying out any substantial modification to the existing procedures of allocation and installation of video intercom equipment. In fact, for example, the housing of the video intercom panel will be unchanged and the laying down of cables or respective interconnections will result even facilitated.

In addition, it is advantageously possible to remotely control the regularity of the first and second communication networks.

In addition, it is advantageously possible to carry out the remote maintenance of the first and second communication networks.

Again, it results possible to carry out modifications to the communication system with simpler network adjustments.

To the embodiments of the system as described above, those skilled in the art, in order to meet contingent needs will be able to carry out modifications, adaptations, and replacements of elements with others functionally equivalent, without departing from the scope of the claims below. Each of the characteristics described herein as belonging to a possible embodiment can be carried out independently of the other embodiments described herein.

## Claims

1. A communication system (100) for a dwelling unit (10), comprising:
- a first central intercom apparatus (200);
- a first Ethernet type local communication network (NC1), the first central intercom apparatus (200) being configured to be operatively associated with the first communication network (NC1);
- at least one second peripheral intercom apparatus (300) configured to be operatively associated with the first communication network (NC1) to communicate with the first central intercom apparatus (200);
the first central intercom apparatus (200) being further configured to recognize the presence of a remote service apparatus (400) relative to the communication system (100), the first central intercom apparatus (200) being configured to be operatively connected, after the presence of the remote service apparatus (400) has been recognized, to the remote service apparatus (400) by means of a third communication network (RE),
**characterised in that** the first intercom apparatus (200) is operatively associated with a switchboard apparatus comprising a first electronic circuit for reading first authentication codes representative of the presence of the remote service apparatus (400).

2. The communication system (100) according to claim 1, wherein the first central intercom apparatus (200) is configured to be operatively associated, by means of the third communication network (RE), with a plurality of remote service centers.

3. The communication system (100) according to claim 2, wherein said plurality of service centers comprises a remote service center belonging to the group consisting of: technical agency, technical laboratory, alarm manager, security agency, public authority.

4. The communication system (100) according to claim 1, wherein the switchboard apparatus comprises a second circuit for reading second codes representative of authentication demand and connection between the first central intercom apparatus (200) and the at least one second peripheral intercom apparatus (300) by means of the first communication network (NC1).

5. The communication system (100) according to claim 1, further comprising a plurality of electronic and/or mechanical apparatuses (PA) operatively associated with the first central intercom apparatus (100) by means of the first communication network (NC1).

6. The communication system (100) according to claim 5, wherein said plurality of apparatuses (PA) comprises apparatuses arranged for generating and/or routing telephony and/or data electric signal in the first communication network (NC1) and second electric power supply apparatuses of the first central intercom apparatus (200).

7. The communication system (100) according to claim 6, wherein said plurality of apparatuses (PA) further comprises security electronic devices, actuators, controllers, numeric keypad, blackboard for videoconferences, street number flag-type sign.

8. The communication system (100) according to claim 1, wherein the first central intercom apparatus (200) comprises an intercom panel comprising a standard ITX card wherein Ethernet network interface card, sound card, serial port and parallel port, VGA video card are integrated.

9. The communication system (100) according to claim 8, wherein the intercom panel comprises an implementing and switch device configured to manage a flow of information for a communication between the intercom panel and the at least one second peripheral intercom apparatus (300).

10. The communication system (100) according to claim 9, wherein the intercom panel is programmed with Asterisk-PBX communication and implementation management software for the control of the sorting of local data in VoIP technology on public protocols.

11. The communication system (100) according to claim 1, wherein the first Ethernet communication network (NC1) is distributed using housings linked to pre-existing intercom housings for housing electric distributors, feeder transformers, UPS apparatuses.

12. The communication system (100) according to claim 1, wherein the first communication network (NC1) is operatively associated with a centralized electric power supply system.

13. The communication system (100) according to claim 1, further comprises at least one second Ethernet type local communication network (NC2) distributed within an apartment of a dwelling unit, the at least one second peripheral intercom apparatus (300) being configured to be operatively associated with the second communication network (NC2).

## Patentansprüche

1. Kommunikationssystem (100) für eine Wohneinheit (10), beinhaltend:
- ein erstes zentrales Sprechgerät (200);
- ein erstes lokales Kommunikationsnetzwerk (NC1) vom Typ Ethernet, wobei das erste zentrale Sprechgerät (200) für eine Wirkzuordnung mit dem ersten Kommunikationsnetzwerk (NC1) konfiguriert ist;
- zumindest ein zweites peripheres Sprechgerät (300), das für eine Wirkzuordnung mit dem ersten Kommunikationsnetzwerk (NC1) konfiguriert ist, um mit dem ersten zentralen Sprechgerät (200) zu kommunizieren;
wobei das erste zentrale Sprechgerät (200) außerdem dazu konfiguriert ist, die Anwesenheit eines Fernwartungsgeräts (400) relativ zu dem Kommunikationssystem (100) festzustellen, wobei das erste zentrale Sprechgerät (200) dazu konfiguriert ist, mit dem Fernwartungsgerät (400) mittels eines dritten Kommunikationsnetzwerks (RE) wirkverbunden zu werden, nachdem die Anwesenheit des Fernwartungsgeräts (400) festgestellt worden ist, **dadurch gekennzeichnet, dass** das erste Sprechgerät (200) einer Vermittlungsvorrichtung wirkzugeordnet wird, die eine erste elektronische Schaltung zum Lesen erster Authentifizierungskodes beinhaltet, welche stellvertretend für die Anwesenheit des Fernwartungsgeräts (400) sind.

2. Kommunikationssystem (100) nach Anspruch 1, wobei das erste zentrale Sprechgerät (200) konfiguriert ist, um mittels des dritten Kommunikationsnetzwerks (RE) mit einer Vielzahl von Fernwartungszentren wirkverbunden zu werden.

3. Kommunikationssystem (100) nach Anspruch 2, wobei die Vielzahl von Wartungszentren ein Fernwartungszentrum beinhaltet aus der Gruppe bestehend aus: technisches Büro, technisches Labor, Alarmmanager, Sicherheitsdienst, Behörde.

4. Kommunikationssystem (100) nach Anspruch 1, wobei die Vermittlungsvorrichtung einen zweiten Schaltkreis zum Lesen zweiter Kodes aufweist, die stellvertretend für eine Authentifizierungsanfrage und eine Verbindung zwischen dem ersten zentralen Sprechgerät (200) und dem zumindest einen zweiten Sprechgerät (300) mittels des ersten Kommunikationsnetzwerks (NC1) sind.

5. Kommunikationssystem (100) nach Anspruch 1, weiter beinhaltend eine Vielzahl elektronischer und/oder mechanischer Geräte (PA), die mit dem ersten zentralen Sprechgerät (100) mittels des ersten Kommunikationsnetzwerks (NC1) zusammenwirken.

6. Kommunikationssystem (100) nach Anspruch 5, wobei die Vielzahl von Geräten (PA) zum Erzeugen und/oder Weiterleiten (Routen) elektrischer Telefon- und/oder Datensignale im ersten Kommunikationsnetzwerk (NC1) vorgesehene Geräte und zweite elektrische Stromversorgungsgeräte für das erste zentrale Sprechgerät (200) einschließt.

7. Kommunikationssystem (100) nach Anspruch 6, wobei die Vielzahl von Geräten (PA) außerdem elektronische Sicherheitseinrichtungen, Aktoren, Kontroller, numerische Tastenfelder, Tafeln für Videokonferenzen und fahnenartige Hausnummernschilder, einschließt.

8. Kommunikationssystem (100) nach Anspruch 1, wobei das erste zentrale Sprechgerät (200) eine Sprechstelle aufweist mit einer Standard ITX-Karte, in die eine Ethernet-Netzwerk-Schnittstellenkarte, eine Soundkarte, ein serieller Port und ein paralleler Port und eine VGA-Grafikkarte integriert sind.

9. Kommunikationssystem (100) nach Anspruch 8, wobei die Sprechstelle eine Implementierungs- und Vermittlungseinheit aufweist, die konfiguriert ist, einen Fluss von Informationen für eine Kommunikation zwischen der Sprechstelle und dem zumindest einen zweiten peripheren Sprechgerät (300) zu handhaben.

10. Kommunikationssystem (100) nach Anspruch 9, wobei die Sprechstelle mit einer Asterisk-PBX Kommunikations- und Implementierungsmanagementsoftware zur Steuerung der Sortierung lokaler Daten in VoIP-Technologie mit öffentlichen Protokollen programmiert ist.

11. Kommunikationssystem (100) nach Anspruch 1, wobei das erste Ethernet-Kommunikationsnetzwerk (NC1) unter Verwendung von Gehäusen verbreitet wird, die mit vorexistierenden Sprechanlagengehäusen zur Unterbringung elektrischer Verteiler, Einspeisungstransformatoren, UPS-Apparaten, verbunden sind.

12. Kommunikationssystem (100) nach Anspruch 1, wobei das erste Kommunikationsnetzwerk (NC1) einem zentralisierten elektrischen Stromversorgungssystem wirkzugeordnet ist.

13. Kommunikationssystem (100) nach Anspruch 1, weiter beinhaltend zumindest ein zweites lokales Kommunikationsnetzwerk (NC2) vom Typ Ethernet, das innerhalb eines Appartements der Wohneinheit verteilt wird, wobei das zumindest eine zweite periphere Sprechgerät (300) für eine Wirkzuordnung mit dem zweiten Kommunikationsnetzwerk (NC2) konfiguriert ist.

## Revendications

1. Système de communication (100) destiné à une unité d'habitation (10), comprenant :
- un premier appareil d'interphone central (200) ;
- un premier réseau de communication local (NC1) de type Ethernet, le premier appareil d'interphone central (200) étant configuré de façon à être associé de manière opérationnelle au premier réseau de communication (NC1) ;
- au moins un deuxième appareil d'interphone périphérique (300) configuré de façon à être associé de manière opérationnelle au premier réseau de communication (NC1) de façon à communiquer avec le premier appareil d'interphone central (200) ;
le premier appareil d'interphone central (200) étant configuré en outre de façon à reconnaître la présence d'un appareil de service distant (400) relativement au système de communication (100), le premier appareil d'interphone central (200) étant configuré de façon à être connecté de manière opérationnelle, une fois que la présence de l'appareil de service distant (400) a été reconnue, à l'appareil de service distant (400) au moyen d'un troisième réseau de communication (RE) ;
**caractérisé en ce que** le premier appareil d'interphone (200) est associé de manière opérationnelle à un appareil de standard qui comprend un premier circuit électronique destiné à lire des premiers codes d'authentification représentatifs de la présence de l'appareil de service distant (400).

2. Système de communication (100) selon la revendication 1, dans lequel le premier appareil d'interphone central (200) est configuré de façon à être associé de manière opérationnelle, au moyen du troisième réseau de communication (RE), à une pluralité de centres de services distants.

3. Système de communication (100) selon la revendication 2, dans lequel ladite pluralité de centres de services comprend un centre de services distant qui appartient au groupe constitué par : une agence technique, un laboratoire technique, un gestionnaire d'alarme, une agence de sécurité, un service public.

4. Système de communication (100) selon la revendication 1, dans lequel l'appareil de standard comprend un deuxième circuit destiné à lire des deuxièmes codes représentatifs d'une demande d'authentification et d'une connexion entre le premier appareil d'interphone central (200) et le ou les deuxièmes appareils d'interphone périphériques (300) au moyen du premier réseau de communication (NC1).

5. Système de communication (100) selon la revendication 1, comprenant en outre une pluralité d'appareils électroniques et / ou mécaniques (PA) associés de manière opérationnelle au premier appareil d'interphone central (100) au moyen du premier réseau de communication (NC 1).

6. Système de communication (100) selon la revendication 5, dans lequel ladite pluralité d'appareils (PA) comprend des appareils agencés de façon à générer et / ou à router un signal électrique de téléphonie et / ou de données dans le premier réseau de communication (NC1) et des deuxièmes appareils d'alimentation électrique du premier appareil d'interphone central (200).

7. Système de communication (100) selon la revendication 6, dans lequel ladite pluralité d'appareils (PA) comprend en outre des dispositifs électroniques de sécurité, des actionneurs, des contrôleurs, des pavés numériques, des tableaux destinés à des vidéoconférences, des signes indicateurs de type numéro de rue.

8. Système de communication (100) selon la revendication 1, dans lequel le premier appareil d'interphone central (200) comprend un panneau d'interphone qui comprend une carte ITX de standard où sont intégrés une carte d'interface réseau Ethernet, une carte son, un port série et un port parallèle, une carte vidéo VGA.

9. Système de communication (100) selon la revendication 8, dans lequel le panneau d'interphone comprend un dispositif de mise en oeuvre et de commutation configuré de façon à gérer un flux d'informations pour une communication entre le panneau d'interphone et le ou les deuxièmes appareils d'interphone périphériques (300).

10. Système de communication (100) selon la revendication 9, dans lequel le panneau d'interphone est programmé avec un logiciel de gestion de communication et de mise en oeuvre PBX-Asterisk pour la commande de tri des données locales dans une technologie VoIP sur des protocoles publics.

11. Système de communication (100) selon la revendication 1, dans lequel le premier réseau de communication Ethernet (NC1) est distribué en utilisant des logements liés à des logements d'interphone préexistants pour loger des distributeurs électriques, des transformateurs de ligne d'alimentation, des appareils UPS.

12. Système de communication (100) selon la revendication 1, dans lequel le premier réseau de communication (NC1) est associé de manière opérationnelle à un système d'alimentation électrique centralisé.

13. Système de communication (100) selon la revendication 1, comprenant en outre au moins un deuxième réseau de communication local (NC2) de type Ethernet distribué à l'intérieur d'un appartement d'une unité d'habitation, le ou les deuxièmes appareils d'interphone périphériques (300) étant configurés de façon à être associés de manière opérationnelle au deuxième réseau de communication (NC2).
